# FASCICULE DE BREVET EUROPEEN

(11) **EP 0 496 689 B1**
(45) Date de publication et mention de la délivrance du brevet: **31.08.1994**
(21) Numéro de dépôt: 92440009.6
(22) Date de dépôt: 22.01.1992
(51) Int. Cl.: C04B 18/28, D06M 11/79, D06M 11/49

(54) **Isolant thermique et phonique à base de chenevotte et son procédé d'obtention**
Thermische- und Schallisolierung auf Basis von Hanfnebenprodukt und Verfahren zur Herstellung desselben
Thermal and acoustic insulation containing hemp by-product and process for making same

(30) Priorité: 22.01.1991 FR 9100841
(43) Date de publication de la demande: 29.07.1992
(73) Titulaire: LA CHANVRIERE DE L'AUBE, 10200 Bar sur Aube (FR)
(72) Inventeur: Rasetti, Charles, F-10120 Saint André les Vergers (FR)

(56) Documents cités:
- EP-A- 0 384 815
- CH-A- 278 067
- FR-A- 1 294 733

## Description

La présente invention a pour objet le produit industriel nouveau que constitue un isolant thermique et phonique à base végétale susceptible d'être utilisé seul ou comme produit cimentaire, ainsi que son procédé d'obtention.

On sait l'importance croissante attachée à l'isolation thermique des bâtiments, et l'importance parallèle accordée à la mise en oeuvre de produits d'origine naturelle, susceptibles de garantir une meilleure salubrité des locaux construits.

On a déjà proposé à cette fin des isolants thermiques à base de chènevotte, fibre obtenue par traitement mécanique du chanvre monoïque et composée de cellulose, d'hémicellulose et de lignine. Parmi les isolants de ce type, on peut citer celui obtenu par imprégnation de la chènevotte à l'aide d'une solution de chlorure de calcium suivie d'une pulvérisation de silicate de soude entraînant la pétrification du coeur putrescible de la chènevotte, une incorporation au mélange obtenu de corps durs pulvérisés tels que la silice ou la chaux provoquant un enrobage silicaté de la chènevotte tout en assurant le ressuage du mélange.

Il s'est toutefois avéré que ce type de produit présentait des inconvénients, notamment du fait que le silicate de soude mis en oeuvre entraîne des phénomènes incontrôlables de déshydratation qui nuisent à la prise normale des liants hydrauliques mis en oeuvre dans les ciments ou bétons, créant des efflorescences en surface des produits cimentaires. D'autre part le chlorure de calcium présente l'inconvénient d'attaquer le fer incorporé dans certains de ces produits, notamment le béton armé.

La présente invention a pour but de remédier à ces inconvénients en proposant un nouveau type d'isolant à base de chènevotte qui présente l'avantage de faciliter la prise normale des liants hydrauliques, l'autorisant à se poursuivre progressivement vers la masse du béton sans être contrariée par des phénomènes de déshydratation superficielle.

La présente invention a ainsi pour objet un nouvel isolant thermique susceptible d'être utilisé seul ou incorporé à un produit cimentaire, et obtenu par traitaient de la chènevotte, préalablement séchée, au moyen d'une solution colloïdale de silicate de potassium et d'oxyde de fer pigmenté.

La chènevotte ainsi traitée fournit en effet un produit aux qualités thixotropiques qui fixe de manière optimale l'eau de gâchage utilisée pour la fabrication de ciments, supprimant ainsi les risques de ressuage et de ségrégation. De plus le produit obtenu possède des propriétés ignifugeantes et n'attaque pas les métaux, et il présente une bonne capacité d'adhérence aux liants hydrauliques, dont il ne contrarie pas les effets.

Le produit selon l'invention peut se présenter sous deux formes différentes, selon l'usage auquel il est destiné : soit sous forme de produit fini, soit sous forme de matière première à agglomérer au moyen de liants hydrauliques.

Dans le premier cas, le produit selon l'invention s'obtient par un traitement en deux étapes : une première étape qui consiste en un trempage ou une aspersion, au moyen d'un solution colloïdale aqueuse de silicate de potassium, de la chènevotte préalablement séchée, et une deuxième étape qui consiste en un traitement de surface au moyen d'oxyde de fer pigmenté pulvérisé à sec sous forme de poudre micronique. Cette pulvérisation entraîne la dessication superficielle du produit silicaté, évitant le séchage artificiel et permettant son stockage immédiat.

La solution mise en oeuvre dans ce cas renferme de 1 à 30 % en poids de silicate de potassium et peut renfermer en outre du carbonate de calcium, à raison de 1 à 30 % en poids.

Dans le deuxième cas, le produit selon l'invention s'obtient par un traitement en une seule étape : la chènevotte est imprégnée d'une solution colloïdale aqueuse renfermant du silicate de potassium et de l'oxyde de fer pigmenté soluble. Après séchage, et éventuellement essorage, le produit est prêt à l'emploi, au même titre que le sable ou tout autre agrégat.

La solution mise en oeuvre dans ce cas renferme de 1 à 30 % en poids de silicate de potassium et de 1 à 30 % en poids d'oxyde de fer soluble. Elle peut renfermer en outre du carbonate de calcium, à raison de 1 à 30 % en poids.

Les exemples qui suivent sont destinés à illustrer l'invention, étant bien entendu qu'ils ne présentent vis à vis d'elle aucun caractère limitatif.

### EXEMPLE 1

Cet exemple porte sur la préparation du produit fini, ou granulat, obtenu conformément à l'invention.

Dans une solution colloïdale de silicate de potasse préparée à partir de 10 litres d'eau et de 2 kg de silicate de potasse, on mélange par trempage 100 litres de chènevotte séchée.

On pulvérise ensuite sur la chènevotte silicatée de l'oxyde de fer pigmenté se présentant sous forme d'une poudre micronique, en remuant la chènevotte à l'aide de tout outil approprié pendant toute la durée de l'application.

Le produit obtenu est ensuite conditionné en vue de sa commercialisation comme produit isolant en vrac.

### EXEMPLE 2

Cet exemple a trait à la préparation du produit servant de matière première pour l'industrie cimentaire.

On mélange par trempage 100 litres de chènevotte dans une solution aqueuse préparée à partir de 10 litres d'eau, de 1,5 kg de silicate de potasse et de 0,2 kg d'oxyde de fer soluble, puis on sèche.

Le produit obtenu qui, se présente sous forme d'un agrégat, est ensuite conditionné en vue de sa commercialisation comme matière première pour l'industrie cimentaire.

## Revendications

1. Procédé d'obtention d'un nouvel isolant thermique et phonique à base végétale, caractérisé en ce qu'il consiste à traiter de la chènevotte préalablement séchée au moyen d'une solution colloïdale aqueuse de silicate de potassium et d'oxyde de fer pigmenté.

2. Procédé selon la revendication 1, caractérisé en ce que la solution mise en oeuvre renferme de 1 à 30 % en poids de silicate de potassium.

3. Procédé selon la revendication 1 ou la revendication 2, caractérisé en ce que le traitement au moyen de la solution de silicate de potassium est effectué préalablement au traitement par l'oxyde de fer pigmenté, pulvérisé à sec, le produit obtenu constituant un granulat utilisable comme produit fini.

4. Procédé selon la revendication 1 ou la revendication 2, caractérisé en ce que le traitement est effectué au moyen d'une solution colloïdale aqueuse renfermant le silicate de potassium et l'oxyde de fer pigmenté, et est suivi d'un séchage du produit obtenu, lequel constitue une matière première pour l'industrie cimentaire.

5. Procédé selon la revendication 4, caractérisé en ce que la solution mise en oeuvre renferme de 1 à 30 % en poids d'oxyde de fer pigmenté.

6. Procédé selon l'une quelconque des revendications précédentes, caractérisé en ce que la solution mise en oeuvre renferme en outre de 1 à 30 % de carbonate de calcium.

7. Isolant thermique et phonique caractérisé en ce qu'il est obtenu par la mise en oeuvre du procédé selon l'une des revendications précédentes.

## Claims

1. Process to make a new vegetable based thermal and acoustic insulation characterised in that it comprises treating previously dried hemp by-products by means of an aqueous colloidal solution of potassium silicate and pigmented iron oxide.

2. Process according to claim 1 characterised in that the solution implemented contains of 1-30% by weight of potassium silicate.

3. Process according to claim 1 or claim 2 characterised in that the treatment by means of potassium silicate solution is effected prior to treatment with the pigmented iron oxide, pulverised dry, the product obtained constitutes a granulate usable as a finished product.

4. Process according to claim 1 or claim 2 characterised in that the treatment is effected by means of an aqueous colloidal solution containing the potassium silicate and the pigmented iron oxide and is followed by a drying of the product obtained which comprises a raw material for the cement industry.

5. Process according to claim 4 characterised in that the solution implemented contains 1-30% by weight of pigmented iron oxide.

6. Process according to any one of the preceding claims characterised in that the solution implemented contains furthermore, between 1 and 30% of calcium carbonate.

7. Thermal and acoustic insulation characterised in that it is made by the implementation of the process according to any one of the preceding claims.

## Patentansprüche

1. Verfahren zur Herstellung einer neuen thermischen und akustischen Isolierung auf pflanzlicher Basis, **dadurch gekennzeichnet**, daß es die Behandlung eines vorher getrockneten Hanfmaterials mit einer kolloidalen, wässrigen Kaliumsilikatlösung und pigmentiertem Eisenoxid umfaßt.

2. Verfahren nach Anspruch 1, **dadurch gekennzeichnet**, daß die verwendete Lösung zwischen 1 und 30 Gew.-% Kaliumsilikat enthält.

3. Verfahren nach einem der Ansprüche 1 oder 2, **dadurch gekennzeichnet,** daß die Behandlung mit der Kaliumsilikatlösung vor der Behandlung mit dem pigmentierten Eisenoxid erfolgt, welches trockenpulverisiert ist, wobei das erhaltene Produkt ein als Endprodukt verwendbares Granulat ist.

4. Verfahren nach einem der Ansprüche 1 oder 2, **dadurch gekennzeichnet,** daß die Behandlung mit einer kolloidalen wässrigen Lösung erfolgt, welche das Kaliumsilikat und das pigmentierte Eisenoxid enthält und das erhaltene Produkt anschließend getrocknet wird, welches dann ein Ausgangsmaterial für die Zementindustrie ist.

5. Verfahren nach Anspruch 4, **dadurch gekennzeichnet,** daß die verwendete Lösung 1 bis 30 Gew.-% pigmentiertes Eisenoxid enthält.

6. Verfahren nach einem der voranstehenden Ansprüche, **dadurch gekennzeichnet,** daß die verwendete Lösung zusätzlich zwischen 1 und 30 % Kalziumcarbonat enthält.

7. Thermische und akustische Isolierung, **dadurch gekennzeichnet,** daß sie nach einen, der in den voranstehenden Ansprüchen beschriebenen Verfahren hergestellt ist.
